# EUROPEAN PATENT APPLICATION

(11) **EP 3 848 428 A1**
(43) Date of publication of application: **14.07.2021**
(21) Application number: 19858494.8
(22) Date of filing: 13.08.2019
(51) Int. Cl.: C09J 7/35, C09J 109/06, C09J 153/02, H01B 7/00, H01B 7/08

(54) **HOT-MELT ADHESIVE, REINFORCING TAPE, AND FLEXIBLE FLAT CABLE HAVING REINFORCED AT CONDUCTOR TERMINAL WITH REINFORCING TAPE**

(30) Priority: 06.09.2018 JP 2018166488; 27.06.2019 JP 2019119250
(71) Applicant: Riken Technos Corporation, Tokyo 101-8336 (JP)
(72) Inventor: SUGIYA Kosuke, Tokyo 101-8336 (JP); ZENNYOJI Yoshihiro, Tokyo 101-8336 (JP)
(74) Representative: J A Kemp LLP
(86) International application number: PCT/JP2019/031821
(87) International publication number: WO 2020/049964

(57) **Abstract**

A hot-melt adhesive for reinforcing a conductor terminal of a flexible flat cable, said hot-melt adhesive comprising at least one member selected from the group consisting of (P1) a hydrogenated product of a block copolymer of an aromatic vinyl compound and a conjugated diene compound, wherein the content of a structural unit derived from the aromatic vinyl compound is not more than 65 mass% relative to the sum of the content of the structural unit derived from the aromatic vinyl compound and the content of a structural unit derived from the conjugated diene compound, (P2) a hydrogenated product of a random copolymer of an aromatic vinyl compound and a conjugated diene compound, (P3) an acid-modified hydrogenated product of a copolymer of an aromatic vinyl compound and a conjugated diene compound, and (P4) an amine-modified hydrogenated product of a copolymer of an aromatic vinyl compound and a conjugated diene compound; and a reinforcing tape wherein a layer of the hot-melt adhesive is formed on one surface of an insulating film.

## Description

### TECHNICAL FIELD

The present invention relates to a hot-melt adhesive, a reinforcing tape, and a flexible flat cable. More specifically, the present invention relates to a hot-melt adhesive having good adhesive strength to a syndiotactic polystyrene resin film, a reinforcing tape including the hot-melt adhesive, and a flexible flat cable having a conductor terminal reinforced with the reinforcing tape.

### BACKGROUND ART

Conventionally, flexible flat cables have been used for wiring electronic devices such as computers, image display devices, mobile phones, printers, car navigation systems, and copiers. A flexible flat cable has a structure such that a plurality of arranged conductors is sandwiched and covered with an insulating adhesive laminate having an adhesive resin composition layer, typically a polyester-based hot-melt adhesive layer, on one surface of an insulating base film. Further, the terminal of the conductor is usually reinforced with a reinforcing tape attached so that the cable can be connected to an electronic device as a connector. The reinforcing tape that has been used has a hot-melt adhesive layer provided on one surface of a thick insulating film, and typically has a polyester-based hot-melt adhesive layer provided on one surface of a biaxially stretched polyethylene terephthalate film having a thickness of about 150-250 µm.

In recent years, the miniaturization and speeding up of operation of electronic devices have been accelerating, and cables used in electronic devices are required to transmit high-speed digital signals with frequencies in the band of several GHz to several tens of GHz at high speed without impairing their high-frequency properties. Since a syndiotactic polystyrene-based resin film has a small relative permittivity, it attracts attention as a material used for a flexible flat cable for such high-speed transmission, typically as an insulating base film of an insulating adhesive laminate. However, it has been found that the syndiotactic polystyrene resin film disadvantageously has very low adhesive strength to the polyester-based hot-melt adhesive.

### CITATION LIST

### PATENT LITERATURE

PATENT LITERATURE 1: WO-A-2016/031342
PATENT LITERATURE 2: WO-A- 2016/185956
PATENT LITERATURE 3: JP-A-2013-151638
PATENT LITERATURE 4: JP-A-2004-189764

### SUMMARY OF INVENTION

### TECHNICAL PROBLEM

An object of the present invention is to provide a hot-melt adhesive having good adhesive strength to a syndiotactic polystyrene resin film, a reinforcing tape including the hot-melt adhesive, and a flexible flat cable in which a conductor terminal is reinforced with the reinforcing tape, and a flexible flat cable including the hot-melt adhesive.

A further object of the present invention is to provide a hot-melt adhesive that exhibits good adhesive strength to both a syndiotactic polystyrene resin film and a polyester-based resin film (including a coat layer of a polyester-based resin), a reinforcing tape including the hot-melt adhesive, a flexible flat cable having a conductor terminal reinforced with the reinforcing tape, and a flexible flat cable including the hot-melt adhesive.

### SOLUTION TO PROBLEM

As a result of diligent research, the present inventor has found that the above objects can be achieved by a hot-melt adhesive containing a specific component.

That is, aspects of the present invention are as follows.
[1]. A hot-melt adhesive for reinforcing a conductor terminal of a flexible flat cable, comprising at least one member selected from the group consisting of:
   (P1) a hydrogenated product of a block copolymer of an aromatic vinyl compound and a conjugated diene compound, wherein a content of a structural unit derived from the aromatic vinyl compound is not more than 65 mass% relative to a total of the content of the structural unit derived from the aromatic vinyl compound and a content of a structural unit derived from the conjugated diene compound,
   (P2) a hydrogenated product of a random copolymer of an aromatic vinyl compound and a conjugated diene compound,
   (P3) an acid-modified hydrogenated product of a copolymer of an aromatic vinyl compound and a conjugated diene compound, and
   (P4) an amine-modified hydrogenated product of a copolymer of an aromatic vinyl compound and a conjugated diene compound; and
   optionally comprising (Q) a petroleum resin and/or (R) an anti-blocking agent.
[2]. A hot-melt adhesive for reinforcing a conductor terminal of a flexible flat cable, comprising 100 parts by mass of at least one member selected from the group consisting of:
   (P1) a hydrogenated product of a block copolymer of an aromatic vinyl compound and a conjugated diene compound, wherein a content of a structural unit derived from the aromatic vinyl compound is not more than 65 mass% relative to a total of the content of the structural unit derived from the aromatic vinyl compound and a content of a structural unit derived from the conjugated diene compound,
   (P2) a hydrogenated product of a random copolymer of the aromatic vinyl compound and the conjugated diene compound,
   (P3) an acid-modified hydrogenated product of a copolymer of an aromatic vinyl compound and a conjugated diene compound, and
   (P4) an amine-modified hydrogenated product of a copolymer of an aromatic vinyl compound and a conjugated diene compound; and
   1-100 parts by mass of (Q) a petroleum resin; and
   optionally comprising 5-200 parts by mass of (R) an anti-blocking agent.
[3]. A reinforcing tape for reinforcing a conductor terminal of a flexible flat cable, comprising a hot-melt adhesive layer on one surface of an insulating film,
   wherein the hot-melt adhesive layer includes a hot-melt adhesive comprising at least one member selected from the group consisting of:
   (P1) a hydrogenated product of a block copolymer of an aromatic vinyl compound and a conjugated diene compound, wherein a content of a structural unit derived from the aromatic vinyl compound is not more than 65 mass% relative to a total of the content of the structural unit derived from the aromatic vinyl compound and a content of a structural unit derived from the conjugated diene compound,
   (P2) a hydrogenated product of a random copolymer of an aromatic vinyl compound and a conjugated diene compound,
   (P3) an acid-modified hydrogenated product of a copolymer of an aromatic vinyl compound and a conjugated diene compound, and
   (P4) an amine-modified hydrogenated product of a copolymer of an aromatic vinyl compound and a conjugated diene compound.
[4]. The reinforcing tape according to item [3], in which the hot-melt adhesive further contains (Q) a petroleum resin.
[5]. The reinforcing tape according to item [4],
   wherein the hot-melt adhesive comprises 100 parts by mass of at least one member selected from the group consisting of:
   the (P1) hydrogenated product of the block copolymer of the aromatic vinyl compound and the conjugated diene compound, wherein the content of the structural unit derived from the aromatic vinyl compound is not more than 65 mass% relative to the total of the content of the structural unit derived from the aromatic vinyl compound and the content of the structural unit derived from the conjugated diene compound,
   the (P2) hydrogenated product of the random copolymer of the aromatic vinyl compound and the conjugated diene compound,
   the (P3) acid-modified hydrogenated product of the copolymer of the aromatic vinyl compound and the conjugated diene compound, and
   the (P4) amine-modified hydrogenated product of the copolymer of the aromatic vinyl compound and the conjugated diene compound; and
   1-100 parts by mass of the (Q) petroleum resin.
[6]. The reinforcing tape according to item [4] or [5], in which the softening point of the (Q) petroleum resin is 120-160°C.
[7]. The reinforcing tape according to any one of items [3] to [6], in which the hot-melt adhesive further contains (R) an anti-blocking agent.
[8]. The reinforcing tape according to item [7], in which the hot-melt adhesive contains 100 parts by mass of at least one member selected from the group consisting of:
   the (P1) hydrogenated product of the block copolymer of the aromatic vinyl compound and the conjugated diene compound, in which the content of the structural unit derived from the aromatic vinyl compound is not more than 65 mass% relative to the total of the content of the structural unit derived from the aromatic vinyl compound and the content of the structural unit derived from the conjugated diene compound,
   the (P2) hydrogenated product of the random copolymer of the aromatic vinyl compound and the conjugated diene compound,
   the (P3) acid-modified hydrogenated product of the copolymer of the aromatic vinyl compound and the conjugated diene compound, and
   the (P4) amine-modified hydrogenated product of the copolymer of the aromatic vinyl compound and the conjugated diene compound;
   1-100 parts by mass of the (Q) petroleum resin; and
   5-200 parts by mass of the (R) anti-blocking agent.
[9]. The reinforcing tape according to item [7] or [8], in which the (R) anti-blocking agent has an average particle size of 5-25 µm.
[10]. The reinforcing tape according to any one of items [3] to [9], in which the adhesive strength between the hot-melt adhesive layer of the reinforcing tape and a syndiotactic polystyrene resin film is 5 N/25 mm or more.
[11]. The reinforcing tape according to any one of items [3] to [10], in which a flexible flat cable having a conductor terminal to be reinforced with the reinforcing tape comprises (i) a plurality of arranged conductors and (ii) an insulating adhesive laminate including an insulating base film that is a syndiotactic polystyrene resin film and an adhesive resin composition layer provided on one surface of the insulating base film, and sandwiching and covering the plurality of conductors.
[12]. The reinforcing tape according to any one of items [3] to [11], in which the hot-melt adhesive contains a hydrogenated product of a block copolymer of styrene and a conjugated diene compound, the hydrogenated product having 5-65 mass% of the content of a structural unit derived from styrene relative to the total of the content of the structural unit derived from styrene and the content of a structural unit derived from the conjugated diene compound, and having a mass average molecular weight of 10-250 thousand.
[13]. The reinforcing tape according to any one of items [3] to [11], in which the hot-melt adhesive contains a hydrogenated product of a random copolymer of styrene and a conjugated diene compound.
[14]. The reinforcing tape according to any one of items [3] to [11], in which the hot-melt adhesive contains an acid-modified hydrogenated product of a copolymer of styrene and a conjugated diene compound.
[15]. The reinforcing tape according to any one of items [3] to [11], in which the hot-melt adhesive contains an amine-modified hydrogenated product of a copolymer of styrene and a conjugated diene compound.
[16]. A flexible flat cable having a conductor terminal reinforced with the reinforcing tape for reinforcing the conductor terminal according to any one of items [3] to [15].
[17]. The flexible flat cable having the reinforced conductor terminal according to item [16], in which an insulating base film of an insulating adhesive laminate that sandwiches and covers a plurality of arranged conductors is a syndiotactic polystyrene resin film.

### ADVANTAGEOUS EFFECTS OF INVENTION

A hot-melt adhesive of the present invention has good adhesive strength to a syndiotactic polystyrene resin film. A preferred hot-melt adhesive of the present invention exhibits good adhesive strength to both a syndiotactic polystyrene resin film and a polyester-based resin film (including a coat layer of polyester-based resin). Therefore, a reinforcing tape including the hot-melt adhesive of the present invention can be suitably used as a tape for reinforcing the terminal of the conductor of a flexible flat cable, particularly as a tape for reinforcing the terminal of the conductor of a flexible flat cable in which a syndiotactic polystyrene resin film is used as the insulating base film of an insulating adhesive laminate. Therefore, a flexible flat cable including the hot-melt adhesive of the present invention, particularly a flexible flat cable including the hot-melt adhesive of the present invention and including a syndiotactic polystyrene resin film as the insulating base film of an insulating adhesive laminate can be suitably used as a flexible flat cable for high-speed transmission of high-speed digital signals. Further, a flexible flat cable in which the terminal of a conductor is reinforced with a reinforcing tape including the hot-melt adhesive of the present invention, particularly a flexible flat cable in which the terminal of a conductor is reinforced with a reinforcing tape including the hot-melt adhesive of the present invention and a syndiotactic polystyrene resin film is used as the insulating base film of an insulating adhesive laminate can be suitably used as a flexible flat cable for high-speed transmission of high-speed digital signals.

### BRIEF DESCRIPTION OF DRAWINGS

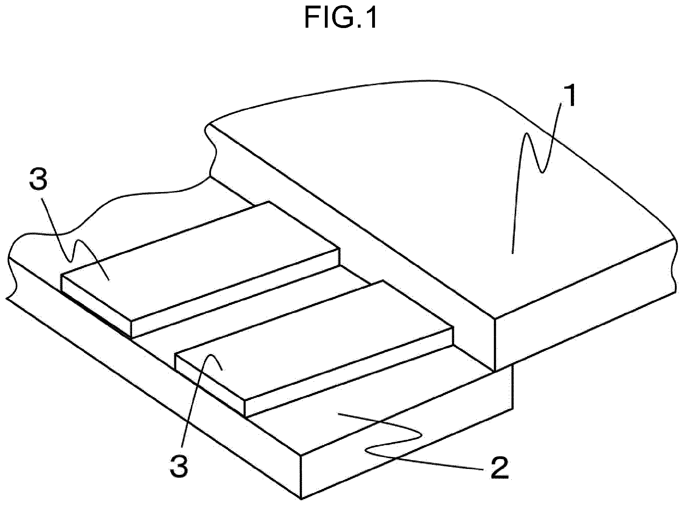

FIG. 1 is a partial perspective view showing an example of the structure of a flexible flat cable, in which a reinforcing tape is attached to conductor terminals to reinforce the conductor terminals.

### DESCRIPTION OF EMBODIMENTS

In this specification, the term "resin" is used as a term including a resin mixture containing two or more resins as well as a resin composition containing a component(s) other than a resin. In this specification, the terms "film" and "sheet" are used interchangeably or replaceably with each other. In this specification, the terms "film" and "sheet" are used for things that can be industrially rolled up. The term "board" is used for things that cannot be industrially rolled up. Further, in this specification, laminating one layer and another layer in order means directly laminating these layers as well as interposing one or more other layers such as an anchor coat between these layers and laminating all the layers.

In this specification, the term "hot-melt adhesive" is used in the meaning specified in JIS K6800-1985, that is, "an adhesive that is applied in a melting state and hardens to adhere when cooled".

In this specification, the term "or more" related to a numerical range is used to mean a certain numerical value or greater than the certain numerical value. For example, 20% or more means 20% or greater than 20%. The term "or less" related to a numerical range is used to mean a certain numerical value or smaller than the certain numerical value. For example, 20% or less means 20% or smaller than 20%. The symbol "-" related to a numerical range is used to mean a certain numerical value, more than the certain numerical value and less than another numerical value, or the other numerical value. Here, the other numerical value is larger than the certain numerical value. For example, 10-90% means 10%, more than 10% and less than 90%, or 90%. Moreover, the upper limit and the lower limit of a numerical range can be combined in any manner, and embodiments having any combination should be read. For example, from the description "it is usually 10% or more, preferably 20% or more, whereas it is usually 40% or less, preferably 30% or less." and " it is usually 10-40%, preferably 20-30%." related to the numerical range of a certain property, it should be read that the numerical range of the certain property is 10-40%, 20-30%, 10-30%, or 20-40% in one embodiment.

Except for working and comparative examples, or unless otherwise specified, all numerical values used herein and in the claims should be understood as being modified by the term "about". Without attempting to limit the application of the doctrine of equivalents to claims, each numerical value should be interpreted in consideration of significant figures and by applying a conventional rounding technique.

### 1. Hot-melt adhesive

A hot-melt adhesive of the present invention contains at least one member selected from the group consisting of (P1) a hydrogenated product of a block copolymer of an aromatic vinyl compound and a conjugated diene compound, (P2) a hydrogenated product of a random copolymer of an aromatic vinyl compound and a conjugated diene compound, (P3) an acid-modified hydrogenated product of a copolymer of an aromatic vinyl compound and a conjugated diene compound, and (P4) an amine-modified hydrogenated product of a copolymer of an aromatic vinyl compound and a conjugated diene compound. Hereinafter, component (P1), component (P2), component (P3), and component (P4) may be collectively referred to as "component (P)". Preferably, the hot-melt adhesive further contains (Q) a petroleum resin. Preferably, the hot-melt adhesive further contains (R) an anti-blocking agent. Hereinafter, each component will be described.

### (P1) Hydrogenated product of block copolymer of aromatic vinyl compound and conjugated diene compound

Component (P1) is a hydrogenated product of a block copolymer of an aromatic vinyl compound and a conjugated diene compound. Component (P1) is usually the hydrogenated product of the block copolymer including at least one, preferably two or more, of a polymer block A mainly having the aromatic vinyl compound, and at least one of a polymer block B mainly having the conjugated diene compound. Examples of component (P1) include hydrogenated products of block copolymers of an aromatic vinyl compound and a conjugated diene compound, the block copolymers having structures such as A-B, A-B-A, B-A-B-A, and A-B-A-B-A.

The polymer block A is a polymer block including only the aromatic vinyl compound or the copolymer block of the aromatic vinyl compound and the conjugated diene compound. In a case where the polymer block A is the copolymer block, the content of a structural unit derived from the aromatic vinyl compound in the polymer block A may be, usually 50 mass% or more, preferably 70 mass% or more, and more preferably 90 mass% or more. The distribution of a structural unit derived from the conjugated diene compound in the polymer block A is not particularly limited. In a case where two or more polymer block As are included, they may have the same structure or different structures from each other.

The polymer block B is a polymer block including only the conjugated diene compound or the copolymer block of the aromatic vinyl compound and the conjugated diene compound. In a case where the polymer block B is the copolymer block, the content of a structural unit derived from the conjugated diene compound in the polymer block B may be, usually 50 mass% or more, preferably 70 mass% or more, more preferably 90 mass% or more, and still more preferably 95 mass% or more. The distribution of a structural unit derived from the aromatic vinyl compound in the polymer block B is not particularly limited. The bonding mode between the conjugated diene compound and the conjugated diene compound (hereinafter, may be abbreviated as "microstructure") is not particularly limited. In a case where two or more polymer block Bs are included, they may have the same structure or different structures from each other.

The aromatic vinyl compound is a polymerizable monomer having a polymerizable carbon-carbon double bond and an aromatic ring. Examples of the aromatic vinyl compound include styrene, t-butylstyrene, α-methylstyrene, p-methylstyrene (4-methylstyrene), divinylbenzene, 1,1-diphenylstyrene, N,N-diethyl-p-aminoethylstyrene, vinyltoluene, and p-t-butylstyrene. Among these compounds, styrene is preferred. As the aromatic vinyl compound, one or two or more of these compounds can be used.

The conjugated diene compound is a polymerizable monomer having a structure in which two carbon-carbon double bonds are bonded by one carbon-carbon single bond. Examples of the conjugated diene compound include 1,3-butadiene, isoprene (2-methyl-1,3-butadiene), 2,3-dimethyl-1,3-butadiene, and chloroprene (2-chloro-1,3-butadiene). Among these compounds, 1,3-butadiene and isoprene are preferred. As the conjugated diene compound, one or two or more of these compounds can be used.

The block copolymer of the aromatic vinyl compound and the conjugated diene compound may be obtained by block copolymerization of any type of aromatic vinyl compound and any type of conjugated diene compound by using a known method, for example, a method described in JPS40-023798B. The molecular chain structure of the block copolymer of the aromatic vinyl compound and the conjugated diene compound may be linear, branched, radial, or any combination thereof.

The component (P1) can be obtained by hydrogenating carbon-carbon double bonds in the block copolymer of the aromatic vinyl compound and the conjugated diene compound to form carbon-carbon single bonds. The hydrogenation can be carried out by any known method, for example, by treatment with a hydrogenation catalyst in an inert solvent.

The hydrogenation rate of component (P1) (i.e. ratio of the number of carbon-carbon single bonds formed by hydrogenation to the number of carbon-carbon double bonds in the block copolymer of the aromatic vinyl compound and the conjugated diene compound before hydrogenation) is not particularly limited. The hydrogenation rate of component (P1) may be, from the viewpoint of heat aging resistance of the adhesive strength of the hot-melt adhesive (i.e. adhesive strength after long-term exposure to a high temperature environment), usually 50 mol% or more, preferably 70 mol% or more, more preferably 90 mol% or more, and still more preferably 95 mol% or more.

The content of the structural unit derived from the aromatic vinyl compound in component (P1) may be, from the viewpoint of the adhesiveness of the hot-melt adhesive, usually 65 mass% or less, preferably 55 mass% or less, more preferably 50 mass% or less, still more preferably 45 mass% or less, and most preferably 40 mass% or less. On the other hand, the content of the above structural unit may be, from the viewpoint of suppressing tackiness, usually 5 mass% or more, preferably 10 mass% or more, more preferably 15 mass% or more, and still more preferably 20 mass% or more. Further, the content of the above structural unit may be, from the viewpoint of the adhesiveness of the hot-melt adhesive, preferably 20 mass% or more, and more preferably 25 mass% or more. Here, the sum of the content of the structural unit derived from the aromatic vinyl compound and the content of the structural unit derived from the conjugated diene compound is 100 mass%.

The mass average molecular weight of component (P1) may be, from the viewpoint of the adhesiveness of the hot-melt adhesive, usually 250 thousand or less, preferably 200 thousand or less, more preferably 150 thousand or less, still more preferably 120 thousand or less, and most preferably 90 thousand or less. On the other hand, the mass average molecular weight may be, from the viewpoint of suppressing tackiness, usually 10 thousand or more, preferably 30 thousand or more, and more preferably 50 thousand or more.

The number average molecular weight of component (P1) may be, from the viewpoint of the adhesiveness of the hot-melt adhesive, usually 120 thousand or less, preferably 100 thousand or less, more preferably 80 thousand or less, and still more preferably 70 thousand or less. On the other hand, the number average molecular weight may be, from the viewpoint of suppressing tackiness, usually 5 thousand or more, preferably 10 thousand or more, and more preferably 20 thousand or more.

In this specification, the mass average molecular weight of component (P) is a polystyrene-equivalent mass average molecular weight calculated from a differential molecular weight distribution curve (hereinafter, may be abbreviated as "GPC curve") measured by gel permeation chromatography (hereinafter, may be abbreviated as "GPC") using chloroform as a mobile phase. The number average molecular weight of component (P) is a polystyrene-equivalent number average molecular weight calculated from a GPC curve measured by GPC using chloroform as a mobile phase.

The GPC measurement uses a high performance liquid chromatography system available from JASCO Corporation (a system including a degasser, a liquid feed pump, an autosampler, a column oven, and an RI (differential refractometer) detector); uses two "PLgelMIXED-D" (trade name) GPC columns available from Agilent Technologies, Inc. in combination as GPC columns; uses chloroform for high performance liquid chromatography available from Wako Pure Chemical Industries, Ltd. as a mobile phase; and can be carried out under the conditions of a flow velocity of 1.0 milliliter/minute, a column temperature of 40°C, a sample concentration of 1 milligram/mlliliter, and a sample injection volume of 100 microliters. The elution volume at each retention volume can be determined from the volume detected with the RI detector, assuming that the refractive index of a measurement sample does not depend on a molecular weight. A calibration curve from a retention volume to a polystyrene-equivalent molecular weight can be made using standard polystyrene "EasiCal PS-1" (trade name) (molecular weights of Plain A: 6375000, 573000, 117000, 31500, and 3480; molecular weights of Plain B: 2517000, 270600, 71800, 10750, and 705) available from Agilent Technologies, Inc. As an analysis program, "ChromNAV" (trade name) available from JASCO Corporation can be used. Note that, regarding the theory of GPC and the actual measurement, you can refer to reference books such as "Size Exclusion Chromatography, High Performance Liquid Chromatography of Polymers, Author: Sadao Mori, the first impression of the first edition, December 10, 1991" from Kyoritsu Shuppan Co., Ltd. and "Synthetic Polymer Chromatography, Editor: Hajime Otani and Tatsuya Hosaki, the first impression of the first edition, July 25, 2013" from Ohmsha, Ltd.

Examples of component (P1) include partially hydrogenated products of a styrene-ethylene-butene copolymer (SEB), styrene-ethylene-propylene copolymer (SEP), styrene-ethylene-butene-styrene copolymer (SEBS), styrene-ethylene-propylene-styrene copolymer (SEPS), styrene-ethylene-ethylene-propylene-styrene copolymer (SEEPS), styrene-butadiene-butylene-styrene copolymer (partially hydrogenated product of a styrene-butadiene-styrene copolymer: SBBS), and styrene-isoprene-styrene copolymer, and a partially hydrogenated product of a styrene-isoprene-butadiene-styrene copolymer. As component (P1), one type or a mixture of two or more types of these hydrogenated products can be used.

### (P2) Hydrogenated product of random copolymer of aromatic vinyl compound and conjugated diene compound

Component (P2) is a hydrogenated product of a random copolymer of an aromatic vinyl compound and a conjugated diene compound.

The random copolymer of the aromatic vinyl compound and the conjugated diene compound can be obtained by random copolymerizing any type of aromatic vinyl compound and any type of conjugated diene compound by using a known method. As the aromatic vinyl compound, compounds similar to those mentioned in the description of component (P1) can be used. As the aromatic vinyl compound, one or two or more of these compounds can be used. As the conjugated diene compound, compounds similar to those mentioned in the description of component (P1) can be used. As the conjugated diene compound, one or two or more of these compounds can be used.

Component (P2) can be obtained by hydrogenating carbon-carbon double bonds in the random copolymer of the aromatic vinyl compound and the conjugated diene compound to form carbon-carbon single bonds. The hydrogenation can be carried out by any known method, for example, by treatment with a hydrogenation catalyst in an inert solvent.

The hydrogenation rate of component (P2) (i.e. ratio of the number of carbon-carbon single bonds formed by hydrogenation to the number of carbon-carbon double bonds in the random copolymer of the aromatic vinyl compound and the conjugated diene compound before hydrogenation) is not particularly limited. The hydrogenation rate of component (P2) may be, from the viewpoint of heat aging resistance of the adhesive strength of the hot-melt adhesive (i.e. adhesive strength after long-term exposure to a high temperature environment), usually 50 mol% or more, preferably 70 mol% or more, more preferably 90 mol% or more, still more preferably 95 mol% or more, and most preferably 99 mol% or more.

The content of the structural unit derived from the aromatic vinyl compound in component (P2) may be, from the viewpoint of the adhesiveness of the hot-melt adhesive, usually 50 mass% or less, preferably 30 mass% or less, more preferably 20 mass% or less, and most preferably 15 mass% or less. On the other hand, the content of the structural unit may be, from the viewpoint of the mechanical strength of the hot-melt adhesive layer, usually 1 mass% or more, preferably 3 mass% or more, and more preferably 5 mass% or more. Here, the sum of the content of the structural unit derived from the aromatic vinyl compound and the content of the structural unit derived from the conjugated diene compound is 100 mass%.

The mass average molecular weight of component (P2) may be, from the viewpoint of the adhesiveness of the hot-melt adhesive, preferably 1 million or less, more preferably 600 thousand or less, and still more preferably 500 thousand or less. On the other hand, the mass average molecular weight may be, from the viewpoint of suppressing tackiness, preferably 50 thousand or more, more preferably 100 thousand or more, and still more preferably 200 thousand or more. The GPC measurement can be carried out by the method mentioned above in the description of component (P1).

Examples of component (P2) include hydrogenated products of random copolymers of styrene and butadiene (HSBR). As component (P2), one type or a mixture of two or more types of these hydrogenated products can be used.

### (P3) Acid-modified hydrogenated product of copolymer of aromatic vinyl compound and conjugated diene compound

The acid-modified hydrogenated product of a copolymer of an aromatic vinyl compound and a conjugated diene compound, which is component (P3), is a substance in which (P3-a) a hydrogenated product of a copolymer of an aromatic vinyl compound and a conjugated diene compound is copolymerized (usually graft copolymerized) with (P3-b) at least one member selected from the group consisting of unsaturated carboxylic acids and derivatives of unsaturated carboxylic acids (hereinafter, it may be referred to as "acid modification"). The acid-modified product of component (P3) can be obtained by reacting any type of component (P3-a) with any type of component (P3-b) by a known method.

Examples of a preferable method for producing the acid-modified product of component (P3) include a method of melt-kneading any type of component (P3-a) and any type of component (P3-b) in the presence of (P3-c) an organic peroxide, more preferably a method of melt-kneading at a temperature equal to or higher than the 1-minute half-life temperature of the organic peroxide of component (P3-c) for a time period of 1 minute or longer, and still more preferably a method of melt-kneading at a temperature equal to or higher than the 1-minute half-life temperature of the organic peroxide of component (P3-c) for a time period of 2 minutes or longer. Note that the term 1-minute half-life temperature is the temperature at which the half-life of an organic peroxide is 1 minute. That is, the term 1-minute half-life temperature means that, when the -O-O-bonds in an organic peroxide are decomposed at this temperature, the time required for the current number of the bonds to be halved from the initial number is 1 minute.

### (P3-a) Hydrogenated product of copolymer of aromatic vinyl compound and conjugated diene compound

Component (P3-a) is a hydrogenated product of a copolymer of an aromatic vinyl compound and a conjugated diene compound and is used for producing an acid-modified product of component (P3). Examples of the hydrogenated product of the copolymer of the aromatic vinyl compound and the conjugated diene compound include a hydrogenated product of a block copolymer of the aromatic vinyl compound and the conjugated diene compound, and a hydrogenated product of a random copolymer of the aromatic vinyl compound and the conjugated diene compound. As the hydrogenated product of the block copolymer of the aromatic vinyl compound and the conjugated diene compound, compounds similar to those mentioned in the description of component (P1) can be used. As the hydrogenated product of the random copolymer of the aromatic vinyl compound and the conjugated diene compound, compounds similar to those mentioned in the description of component (P2) can be used. As component (P3-a), one type or a mixture of two or more types of such hydrogenated products of copolymers can be used.

### (P3-b) Unsaturated carboxylic acid, derivative of unsaturated carboxylic acid

Component (P3-b) is at least one member selected from the group consisting of unsaturated carboxylic acids and derivatives of unsaturated carboxylic acids. Component (P3-b) copolymerizes (usually graft copolymerizes) with component (P3-a) and serves to enhance the adhesiveness of the hot-melt adhesive.

Examples of the above unsaturated carboxylic acids include maleic acid, itaconic acid, fumaric acid, acrylic acid, and methacrylic acid. Examples of the above derivatives of the unsaturated carboxylic acids include, an acid anhydride of an unsaturated polyvalent carboxylic acid such as maleic anhydride, itaconic anhydride, and fumaric anhydride; a compound that is an ester of an unsaturated polyvalent carboxylic acid such as maleic acid monoester, itaconic acid monoester, and fumaric acid monoester, and that have one or more carboxyl groups; a polyvalent ester of an unsaturated polyvalent carboxylic acid such as maleic acid diester, itaconic acid diester, and fumaric acid diester; and an alkyl acrylate such as methyl acrylate, and an alkyl methacrylate such as methyl methacrylate. As component (P3-b), from the viewpoint of reactivity with component (P3-a) and the adhesiveness of the hot-melt adhesive, among these compounds, unsaturated carboxylic acids, acid anhydrides of polyvalent carboxylic acids, and esters of unsaturated polyvalent carboxylic acids with one or more carboxyl groups are preferred; unsaturated carboxylic acids and acid anhydrides of unsaturated polyvalent carboxylic acids are more preferred; and maleic anhydride is still more preferred. As component (P3-b), one or a mixture of two or more of these compounds can be used.

The blending amount of component (P3-b) may be, from the viewpoint of surely obtaining the effect of improving the adhesiveness, usually 0.05 parts by mass or more, and preferably 0.1 part by mass or more with respect to 100 parts by mass of component (P3-a). On the other hand, the blending amount of component (P3-b) may be, from the viewpoint of suppressing the generation of gel during the acid modification and maintaining good coatability of the hot-melt adhesive, usually 20 parts by mass or less, preferably 10 parts by mass or less, more preferably 5 parts by mass or less, and still more preferably 3 parts by mass or less.

### (P3-c) Organic peroxide

Component (P3-c) is an organic peroxide. Component (P3-c) serves to catalyze the reaction between component (P3-a) and component (P3-b).

Examples of the organic peroxide include dicumyl peroxide, di-tert-butyl peroxide, 2,5-dimethyl-2,5-di-(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butyl peroxybenzoate, tert-butyl peroxyisopropylcarbonate, diacetyl peroxide, lauroyl peroxide, and tert-butyl cumyl peroxide. As component (P3-c), from the viewpoint of the productivity of component (P3) and the adhesiveness of the hot-melt adhesive, 2,5-dimethyl-2,5-di-(tert-butylperoxy)hexane and 2,5-dimethyl-2,5-di-(tert-butylperoxy)hexin-3 are preferred among these compounds. As component (P3-c), one or a mixture of two or more of these compounds can be used.

The blending amount of component (P3-c) may be, from the viewpoint of surely obtaining the catalytic effect, usually 0.001 part by mass or more, and preferably 0.03 parts by mass or more with respect to 100 parts by mass of component (P3-a). On the other hand, the blending amount of component (P3-c) may be, from the viewpoint of suppressing the generation of gel during the acid modification and maintaining good coatability of the hot-melt adhesive, usually 3 parts by mass or less, preferably 2 parts by mass or less, and more preferably 1 part by mass or less.

A device used for the melt-kneading is not particularly limited. Examples of the device include a single-screw extruder, a twin-screw extruder, a Banbury mixer, various kneaders, and a device in which two or more of these devices are combined.

As the acid-modified product of component (P3), one type or a mixture of two or more types of the acid-modified products can be used.

### (P4) Amine-modified hydrogenated product of copolymer of aromatic vinyl compound and conjugated diene compound

The amine-modified hydrogenated product of a copolymer of an aromatic vinyl compound and a conjugated diene compound of component (P4) is a substance in which (P4-a) a hydrogenated product of a copolymer of an aromatic vinyl compound and a conjugated diene compound is copolymerized (usually graft copolymerized) with (P4-b) an amine compound (hereinafter, it may be referred to as "amine modification"). The amine-modified product of component (P4) can be obtained by reacting any type of component (P4-a) with any type of component (P4-b) by a known method.

A method of producing the amine-modified product of component (P4) includes, for example, a method of melt-kneading any type of component (P4-a) and any type of component (P4-b) in the presence of (P4-c) an organic peroxide.

### (P4-a) Hydrogenated product of copolymer of aromatic vinyl compound and conjugated diene compound

Component (P4-a) is a hydrogenated product of a copolymer of an aromatic vinyl compound and a conjugated diene compound and is used for producing component (P4). Examples of the copolymer of the aromatic vinyl compound and the conjugated diene compound include a block copolymer of the aromatic vinyl compound and the conjugated diene compound, and a random copolymer of the aromatic vinyl compound and the conjugated diene compound. As the hydrogenated product of the block copolymer of the aromatic vinyl compound and the conjugated diene compound, compounds similar to those mentioned in the description of component (P1) can be used. As the hydrogenated product of the random copolymer of the aromatic vinyl compound and the conjugated diene compound, compounds similar to those mentioned in the description of component (P2) can be used. As component (P4-a), one type or a mixture of two or more types of such hydrogenated products of copolymers can be used.

### (P4-b) Amine compound

Component (P4-b) is an amine compound. Component (P4-b) serves to copolymerize (usually graft copolymerize) with component (P4-a) and enhance the adhesiveness of the hot-melt adhesive.

Examples of the amine compound include aliphatic amine compounds, aromatic amine compounds, and heterocyclic amine compounds.

Examples of the aliphatic amine compounds include aliphatic primary amine compounds, aliphatic secondary amine compounds, aliphatic tertiary amine compounds, and aliphatic polyvalent amine compounds (aliphatic amine compounds having two or more amine groups in one molecule).

Examples of the aliphatic primary amine compounds include saturated aliphatic primary amine compounds such as methylamine, ethylamine, propylamine, isopropylamine, butylamine, isobutylamine, tert-butylamine, pentylamine, isopentylamine, hexylamine, heptylamine, octylamine, 2-ethylhexylamine, and cyclohexylamine; and unsaturated aliphatic primary amine compounds such as dodecenylamine, octadecenylamine, and docosenylamine.

Examples of the aliphatic secondary amine compounds include saturated aliphatic secondary amine compounds such as dimethylamine, diethylamine, diisobutylamine, and dicyclohexylamine; and unsaturated aliphatic secondary amine compounds.

Examples of the aliphatic tertiary amine compounds include saturated aliphatic tertiary amine compounds such as trimethylamine, triethylamine, triethanolamine, tributylamine, N,N-diisopropylethylamine, and N,N-dimethylcyclohexylamine; and unsaturated aliphatic tertiary amine compounds such as N,N-dimethyloctadecenylamine.

Examples of the aliphatic polyvalent amine compounds include ethylenediamine, hexamethylenediamine, and N,N,N',N'-tetramethylethylenediamine.

Examples of the aromatic amine compounds include anilines (i.e. anilines and its derivatives) and arylalkylamine compounds.

Examples of the anilines include anilines that are primary amine compounds, such as aniline, toluidine, xylidine, anisidine, phenetidine, 4-ethylaniline, 2-ethylaniline, and 4-isopropylaniline; anilines that are secondary amine compounds, such as N-methylaniline, N-ethylaniline, and N-isopropylaniline; and anilines that are tertiary amine compounds, such as N,N-dimethylaniline, N,N-diethylaniline, and N,N-diisopropylaniline.

Examples of the arylalkylamine compounds include arylalkyl primary amine compounds such as benzylamine, 1-phenylethylamine, and 2-phenylethylamine; arylalkyl secondary amine compounds such as N-methylbenzylamine; and arylalkyl tertiary amine compounds such as N,N-diethylbenzylamine.

Examples of the heterocyclic amines include pyrrolidine, piperidine, piperazine, imidazole, 2-thienylamine, and 2-thienylmethylamine.

As component (P4-b), one or a mixture of two or more of the above compounds can be used.

The blending amount of component (P4-b) may be, from the viewpoint of surely obtaining the effect of improving the adhesiveness, usually 0.05 parts by mass or more, and preferably 0.1 part by mass or more with respect to 100 parts by mass of component (P4-a). On the other hand, the blending amount of component (P4-b) may be, from the viewpoint of suppressing the generation of gel during the amine modification and maintaining good coatability of the hot-melt adhesive, usually 20 parts by mass or less, preferably 10 parts by mass or less, more preferably 5 parts by mass or less, and still more preferably 3 parts by mass or less.

### (P4-c) Organic peroxide

Component (P4-c) is an organic peroxide. Component (P4-c) serves to catalyze the reaction between component (P4-a) and component (P4-b).

The organic peroxide include the organic peroxides in the description of component (P3-c). As component (P4-c), one or a mixture of two or more of such organic peroxides can be used.

The blending amount of component (P4-c) may be, from the viewpoint of surely obtaining the catalytic effect, usually 0.001 part by mass or more, and preferably 0.03 parts by mass or more with respect to 100 parts by mass of component (P4-a). On the other hand, the blending amount of component (P4-c) may be, from the viewpoint of suppressing the generation of gel during the amine modification and maintaining good coatability of the hot-melt adhesive, usually 10 parts by mass or less, preferably 5 parts by mass or less, more preferably 3 parts by mass or less, and still more preferably 1 part by mass or less.

A device used for the melt-kneading is not particularly limited. Examples of the device include a single-screw extruder, a twin-screw extruder, a Banbury mixer, various kneaders, and a device in which two or more of these devices are combined.

The melt-kneading is preferably carried out for 1 minute or longer at a temperature equal to or higher than the 1-minute half-life temperature of the organic peroxide of component (P4-c), and more preferably carried out for 2 minutes or longer at a temperature equal to or higher than the 1-minute half-life temperature of the organic peroxide of component (P4-c).

As the amine-modified product of component (P4), one type or a mixture of two or more types of the amine-modified products can be used.

Component (P1), (P2), (P3-a) or (P4-a) may contain a structural unit derived from a polymerizable compound other than the aromatic vinyl compound and the conjugated diene compound to the extent not contrary to the object of the present invention. Although not particularly limited, the content of the structural unit derived from the other polymerizable compound may be, for example, about 10 mass% or less with respect to the total of the structural unit derived from the aromatic vinyl compound, the structural unit derived from the conjugated diene compound, and the structural unit derived from the other polymerizable compound.

The other polymerizable compound is a compound that is copolymerizable with at least any of, preferably with both of the aromatic vinyl compound and the conjugated diene compound. The polymerizable compound is usually a compound having a carbon-carbon double bond and is typically a compound having an ethylenic double bond. Examples of the polymerizable compound include α-olefins such as ethylene, propylene, 1-butene, 1-hexene, and 1-octene; nonconjugated dienes such as isobutylene; (meta) acrylic acid esters such as methyl acrylate, ethyl acrylate, butyl acrylate, methyl methacrylate, ethyl methacrylate, and butyl methacrylate; and acrylic acid, methacrylic acid, and maleic anhydride. As the polymerizable compound, one or more of these compounds can be used.

### (Q) Petroleum resin

The hot-melt adhesive of the present invention preferably further contains the petroleum resin of component (Q). The petroleum resin of component (Q) serves to increase the adhesive strength between a syndiotactic polystyrene resin film as the insulating base film of a flexible flat cable and a hot-melt adhesive. The petroleum resin of component (Q) serves to increase the adhesive strength mainly between a hot-melt adhesive and a polyester-based resin film as the insulating film of a reinforcing tape (including the coat layer of a polyester-based resin mainly formed as an anchor coat on the surface of the polyester-based resin film), and mainly between a hot-melt adhesive and the ccoat layer of a polyester-based resin as the adhesive resin composition layer of an insulating adhesive laminate. Further, the petroleum resin of component (Q) serves to increase the adhesive strength between a conductor of a flexible flat cable and a hot-melt adhesive.

The petroleum resin of component (Q) is a polymer of an unsaturated hydrocarbon compound having a large number of carbon atoms (usually about 4-20 carbon atoms) produced by decomposition of naphtha and the like. The unsaturated hydrocarbon compound used as the monomer of component (Q) is typically an aliphatic unsaturated hydrocarbon compound and/or an aromatic unsaturated hydrocarbon compound.

Examples of the aliphatic unsaturated hydrocarbon compound include 1-butene, 2-butene, 1-pentene, 2-pentene, 1-hexene, 2-hexene, 3-hexene, 1-heptene, 2-heptene, 3-heptene, 1,3-pentadiene, cyclopentadiene (cyclopenta-1,3-diene), methylcyclopentadiene, ethylcyclopentadiene, 1,3-butadiene, isoprene (2-methyl-1,3-butadiene), and dicyclopentadiene (tricyclo[5.2.1.0^{2,6}]deca-3,8-diene). As the aliphatic unsaturated hydrocarbon compound, one or a mixture of two or more of these compounds can be used.

Examples of the aromatic unsaturated hydrocarbon compound include styrene, α-methylstyrene, β-methylstyrene, 4-methylstyrene, vinylxylene, indene, methylindene, and ethylindene. As the aromatic unsaturated hydrocarbon compound, one or a mixture of two or more of these compounds can be used.

The petroleum resin of component (Q) is preferably hydrogenated from the viewpoint of miscibility with component (P). The hydrogenation rate of the petroleum resin of component (Q) (i.e. the ratio of the number of carbon-carbon single bonds formed by hydrogenation to the number of carbon-carbon double bonds in the petroleum resin before hydrogenation) may be, usually 80 mol% or more, preferably 90 mol% or more, and more preferably 95 mol% or more. The hydrogenation can be carried out by any known method, for example, by treatment with a hydrogenation catalyst in an inert solvent.

The softening point of the petroleum resin of component (Q) is not particularly limited and can be appropriately determined in consideration of the rated temperature of a flexible flat cable in which the hot-melt adhesive of the present invention is used. The softening point of the petroleum resin of component (Q) may be, from the viewpoint of enabling the hot-melt adhesive of the present invention to be used for a flexible flat cable having a higher rated temperature, usually 90°C or higher, preferably 120°C or higher, and more preferably 135°C or higher. On the other hand, the softening point of the petroleum resin of component (Q) may be, from the viewpoint of efficiency in the production of a flexible flat cable, usually 200°C or less, preferably 160°C or less, and more preferably 150°C or less. Here, the softening point is measured according to 6.4 softening point test method (a ring and ball method) of JIS K 2207-1996.

The number average molecular weight of the petroleum resin of component (Q) is not particularly limited. The number average molecular weight of the petroleum resin of component (Q) may be usually 100-3000, and preferably 200-2000. In this specification, the number average molecular weight of the petroleum resin of component (Q) is a polystyrene-equivalent number average molecular weight calculated from a GPC curve measured by GPC using tetrahydrofuran as a mobile phase. The measurement of the number average molecular weight of the petroleum resin of component (Q) by GPC uses GPC columns such that, from the upstream side, two "GPC KF-806L"s (trade name), one "GPC KF-802" (trade name), and one "GPC KF-801"(trade name), which are styrene-divinylbenzene copolymer columns available from Showa Denko K.K., are connected; uses tetrahydrofuran for high performance liquid chromatography available from Wako Pure Chemical Industries, Ltd. as a mobile phase; and can be carried out in a similar manner to that described for the molecular weight measurement of component (P) by GPC, except that a standard sample is appropriately selected so that the measured value of the number average molecular weight of component (Q) is interpolated in the calibration curve.

The blending amount of the petroleum resin of component (Q) is not particularly limited because component (Q) is optional. The blending amount of the petroleum resin of component (Q) may be, from the viewpoint of surely obtaining the effect of increasing the adhesive strength of the hot-melt adhesive, usually 1 part by mass or more, preferably 10 parts by mass or more, more preferably 20 parts by mass or more, still more preferably 30 parts by mass or more, and most preferably 40 parts by mass or more with respect to 100 parts by mass of component (P). On the other hand, the blending amount of the petroleum resin of component (Q) may be usually 100 parts by mass or less, preferably 80 parts by mass or less, and more preferably 70 parts by mass or less.

### (R) Anti-blocking agent

The hot-melt adhesive of the present invention preferably further contains the anti-blocking agent of component (R). The anti-blocking agent of component (R) serves to prevent the occurrence of production trouble caused by the surface of the hot-melt adhesive layer of a reinforcing tape touching and being tacked to the chuck and the like of a manufacturing apparatus for a flexible flat cable. On the other hand, the anti-blocking agent of component (R) does not reduce the adhesive strength of a hot-melt adhesive.

Although not intended to be bound by theory, it is considered that the anti-blocking agent of component (R) is projected as protrusions from the surface of the hot-melt adhesive layer of a reinforcing tape, so that production trouble caused by the surface of the hot-melt adhesive layer of the reinforcing tape touching and being tacked to the chuck and the like of a manufacturing apparatus for a flexible flat cable is prevented from the occurrence; on the other hand, when the reinforcing tape is attached to the flexible flat cable, the pressure is sufficiently large, so that the anti-blocking agent of component (R) is sunk into the hot-melt adhesive layer, thereby not reducing the adhesive strength.

The anti-blocking agent of component (R) typically includes inorganic particles and resin particles. Examples of the inorganic particles include silica (silicon dioxide); talc; calcium carbonate; metal oxide particles such as aluminum oxide, zirconia, titania, zinc oxide, germanium oxide, indium oxide, tin oxide, indium tin oxide, antimony oxide, and cerium oxide; metal fluoride particles such as magnesium fluoride and sodium fluoride; metal sulfide particles; metal nitride particles; and metal particles. Examples of the resin particles include silicon-based resins, styrene-based resins, acrylic-based resins, fluorine-based resins, polycarbonate-based resins, ethylene-based resins, and crosslinked products thereof, and cured resins of amino-based compounds and formaldehyde. As the anti-blocking agent of component (R), one or a mixture of two or more of these particles can be used.

The average particle size of the anti-blocking agent of component (R) may be, from the viewpoint of surely preventing the occurrence of the production trouble as mentioned above, usually 1/30 or more of the thickness of the hot-melt adhesive layer of a reinforcing tape, preferably 1/6 or more of the thickness of the hot-melt adhesive layer of a reinforcing tape, more preferably 4/15 or more of the thickness of the hot-melt adhesive layer of a reinforcing tape, and still more preferably 1/3 or more of the thickness of the hot-melt adhesive layer of a reinforcing tape. On the other hand, the average particle size of component (R) may be, from the viewpoint of preventing the adhesive strength of the hot-melt adhesive from decreasing, usually equal to or less than the thickness of the hot-melt adhesive layer of a reinforcing tape, preferably 5/6 or less of the thickness of the hot-melt adhesive layer of a reinforcing tape, and more preferably 2/3 or less of the thickness of the hot-melt adhesive layer of a reinforcing tape. The average particle size of component (R) may be, in a case where the thickness of the hot-melt adhesive layer of a reinforcing tape is 30 µm, usually 1 µm or more, preferably 5 µm or more, more preferably 8 µm or more, and still more preferably 10 µm or more. On the other hand, the average particle size of component (R) may be, in a case where the thickness of the hot-melt adhesive layer of a reinforcing tape is 30 µm, usually 30 µm or less, preferably 25 µm or less, and more preferably 20 µm or less.

In this specification, the average particle size of the anti-blocking agent of component (R) is a particle size such that the cumulative total from the smallest particle is 50 mass% in the particle size distribution curve measured by using a laser diffraction/scattering particle size analyzer. As the laser diffraction/scattering particle size analyzer, for example, the laser diffraction/scattering particle size analyzer "MT3200II" (trade name) available from Nikkiso Co., Ltd. can be used.

The blending amount of the anti-blocking agent of component (R) is not particularly limited because component (R) is optional. The blending amount of the anti-blocking agent of component (R) may be, from the viewpoint of surely preventing the occurrence of the production trouble as mentioned above, usually 5 parts by mass or more, preferably 30 parts by mass or more, more preferably 50 parts by mass or more, still more preferably 70 parts by mass or more, and most preferably 80 parts by mass or more with respect to 100 parts by mass of component (P). On the other hand, the blending amount of the anti-blocking agent of component (R) may be, from the viewpoint of preventing the adhesive strength of the hot-melt adhesive from decreasing, usually 200 parts by mass or less, preferably 150 parts by mass or less, and more preferably 120 parts by mass or less.

The hot-melt adhesive of the present invention can further contain, if desired, a component other than component (P), (Q) or (R), for example, a thermoplastic resin other than component (P) or (Q); a pigment, an inorganic filler, an organic filler, a resin filler, and a flame retardant; and an additive such as a lubricant, an antioxidant, a weathering stabilizer, a heat stabilizer, a mold release agent, an antistatic agent, and a surfactant, to the extent not contrary to the object of the present invention.

### 2. Reinforcing tape

A reinforcing tape of the present invention includes the hot-melt adhesive of the present invention. The reinforcing tape of the present invention typically includes the layer of the hot-melt adhesive of the present invention provided on one surface of an insulating film, either directly or via an anchor coat. The reinforcing tape of the present invention is usually produced in a wide width and then slit to a desired width to be used in the production for a flexible flat cable (in the finish processing for a conductor terminal). The reinforcing tape of the present invention can be suitably used for reinforcing the conductor terminal of a flexible flat cable. The hot-melt adhesive of the present invention has been described above.

The insulating film imparts rigidity and strength to the reinforcing tape of the present invention and serves to enable the conductor terminal of a flexible flat cable to be connected to an electronic device as a connector.

Examples of the insulating film include resin films of a polyester-based resin such as polyethylene terephthalate-based resin and polyethylene naphthalate-based resin; a polyphenylene sulfide-based resin; a polycarbonate-based resin; a polyolefin-based resin such as polypropylene-based resin and polyethylene-based resin; a polyamide-based resin; and a polystyrene resin. The insulating film includes a non-stretched film, a uniaxially stretched film, and a biaxially stretched film of these films. Further, the insulating film includes films of one or a mixture of two or more of these resins. Moreover, the insulating film includes a laminated film in which two or more layers of one or more of the above films are laminated. Among these films, from the viewpoint of rigidity, strength, and cost, a biaxially stretched film of a polyethylene terephthalate-based resin and a laminated film in which two or more layers of such a biaxially stretched film are laminated are preferable.

The thickness of the insulating film is not particularly limited. The thickness of the insulating film may be, from the viewpoint of imparting rigidity and strength to the reinforcing tape of the present invention and enabling the conductor terminal of a flexible flat cable to be connected to an electronic device as a connector, usually 50 µm or more, preferably 100 µm or more, more preferably 125 µm or more, and still more preferably 150 µm or more. On the other hand, the thickness of the insulating film may be, from the viewpoint of processability, usually 500 µm or less, preferably 400 µm or less, more preferably 300 µm or less, and still more preferably 250 µm or less.

The insulating film may include a colored layer formed from a resin containing a colorant. The insulating film may be printed on any one or more of surfaces of a film constituting the insulating film.

A method of providing the layer of the hot-melt adhesive of the present invention on one surface of the insulating film is not particularly limited. The examples of this method include a method of melt-extruding the hot-melt adhesive of the present invention onto one surface of the insulating film using an apparatus equipped with an extruder, a T-die, and a winder; a method of melt-extruding the hot-melt adhesive of the present invention using this apparatus onto one surface of any type of film substrate, usually on a surface that has been subjected to easy peeling treatment, to form the film of the hot-melt adhesive of the present invention and then transferring the film onto one surface of the insulating film; and a method of dissolving the hot-melt adhesive of the present invention in a solvent and making it form a coat layer on one surface of the insulating film by a known web coating method.

The solvent is not particularly limited as long as it does not react with components of the hot-melt adhesive of the present invention or catalyze (promote) the self-reaction (including deterioration reaction) of these components. Examples of the solvent include toluene, methyl ethyl ketone, methyl isobutyl ketone, diacetone alcohol, 1-methoxy-2-propanol, ethyl acetate, n-butyl acetate, and acetone. As the solvent, one or a mixture of two or more of these solvents can be used.

Examples of the web coating method include roll coating, gravure coating, reverse coating, roll brushing, spray coating, air-knife coating, and die coating.

The thickness of the layer of the hot-melt adhesive of the present invention may be, from the viewpoint of the adhesive strength, usually 1 µm or more, preferably 5 µm or more, more preferably 10 µm or more, and still more preferably 15 µm or more. On the other hand, the thickness of the layer of the hot-melt adhesive may be usually 60 µm or less, preferably 50 µm or less, and more preferably 40 µm or less, from the viewpoint of connectivity between a flexible flat cable having a conductor terminal reinforced with the reinforcing tape of the present invention and a connector (the connectivity being such that the flexible flat cable has a structure capable of connecting to the connector, and that connection work is easy, etc.).

The anchor coat serves to improve the adhesive strength between the insulating film and the layer of the hot-melt adhesive of the present invention.

A paint for forming the anchor coat is not particularly limited, and any type of anchor coat forming paint can be used. Examples of the anchor coat forming paint include polyester-based, acrylic-based, polyurethane-based, acrylic urethane-based, and polyester-urethane-based anchor coat forming paints. As the anchor coat forming paint, one or a mixture of two or more of these anchor coat forming paints can be used.

In a case where a polyester-based resin film is used as the insulating film, a polyester-based anchor coat forming paint is preferable among these anchor coat forming paints, and a thermoplastic copolyester-based anchor coat forming paint is more preferable. An anchor coat forming paint containing 100 parts by mass of a thermoplastic copolyester and 5-50 parts by mass of a compound having two or more isocyanate groups in one molecule is still more preferable.

The thermoplastic copolyester may be preferably non-crystalline or low-crystalline, and more preferably non-crystalline. The non-crystalline or low-crystalline thermoplastic copolyester is easily dissolved in a general-purpose organic solvent such as methyl ethyl ketone and ethyl acetate at room temperature and has a good workability of a paint preparation.

The thermoplastic copolyester may be a mixture of a thermoplastic copolyester 1 having a glass transition temperature of 40°C or higher, preferably 50°C or higher, and more preferably 55°C or higher, and a thermoplastic copolyester 2 having a glass transition temperature of 20°C or less, preferably 15°C or less, and more preferably 10°C or less. By using such a mixture, a balance between the adhesive strength of the anchor coat and the physical properties at low temperatures can be improved. The mixing ratio of the thermoplastic copolyester 1 and the thermoplastic copolyester 2 (the thermoplastic copolyester 1/the thermoplastic copolyester 2) may be, in a case where the balance between the adhesive strength of the anchor coat and the physical properties at low temperatures is emphasized, usually 70/30-30/70, and preferably 60/40-40/60. In a case where the adhesive strength of the anchor coat is emphasized, the mixing ratio may be usually 70/30-95/5, and preferably 75/25-90/10. In a case where the physical properties of the anchor coat at low temperatures are emphasized, the mixing ratio may be usually 30/70-5/95, and preferably 25/75-10/90. Here, the mixing ratio is a mass ratio.

In this specification, polyesters having an amount of heat of fusion of 5 J/g or less are defined as non-crystalline, and polyesters having an amount of heat of fusion of more than 5 J/g and usually 20 J/g or less, preferably 15 J/g or less, and more preferably 10 J/g or less are defined as low-crystalline, the amount of heat of fusion being calculated from the fusion curve of a final heating process measured by a temperature program of holding at 300°C for 5 minutes, cooling to -50°C at a temperature lowering rate of 20°C/min, holding at -50°C for 5 minutes, and then heating to 300°C at a temperature rising rate of 20°C/min using a Diamond DSC type differential scanning calorimeter available from PerkinElmer Japan Co., Ltd. In addition, a glass transition temperature is a midpoint glass transition temperature calculated from the fusion curve.

The thermoplastic copolyester can be obtained, for example, by polymerizing any type of polyvalent carboxylic acid with any type of polyol using a known method.

Examples of the polyvalent carboxylic acid include an aromatic polyvalent carboxylic acid such as terephthalic acid, isophthalic acid, orthophthalic acid, and naphthalenedicarboxylic acid, diphenyl-4,4'-dicarboxylic acid, diphenoxyetanedicarboxylic acid, diphenyl-3,3'-dicarboxylic acid, diphenyl-4,4'-dicarboxylic acid, and anthracendicarboxylic acid; an alicyclic polyvalent carboxylic acid such as 1,2-cyclohexanedicarboxylic acid, 1,3-cyclohexanedicarboxylic acid, and 1,4-cyclohexanedicarboxylic acid; an aliphatic polyvalent carboxylic acid such as malonic acid, succinic acid, glutaric acid, adipic acid, pimelic acid, suberic acid, azelaic acid, and sebacic acid; and ester-forming derivatives thereof. As the polyvalent carboxylic acid, one or a mixture of two or more of these compounds can be used.

Examples of the polyol include an aliphatic polyhydric alcohol such as ethylene glycol, diethylene glycol, trimethylene glycol, tetramethylene glycol, neopentyl glycol, polyethylene glycol, 1,2-propanediol, 1,3-propanediol, polypropylene glycol, 1,2-butanediol, 1,3-butanediol, 1,4-butanediol, 1,5-pentanediol, 1,6-hexanediol, neopentyl glycol, decamethylene glycol, 3-methyl-1,5-pentanediol, 2-methyl-1,3-propanediol, 1,2-cyclohexanediol, 1,4-cyclohexanediol, 1,4-cyclohexanedimethanol, 2,2',4,4'-tetramethyl-1,3-cyclobutanediol, glycerin, and trimethylolpropane; an aromatic polyol such as xylylene glycol, 4,4'-dihydroxybiphenyl, 2,2-bis(4-hydroxyphenyl)propane, bis(4-hydroxyphenyl)sulfone, bisphenol A, an alkylene oxide adduct of bisphenol A; and ester-forming derivatives thereof. As the polyols, one or a mixture of two or more of these compounds can be used.

Examples of the compound having two or more isocyanate groups in one molecule include methylenebis-4-cyclohexylisocyanate; a polyisocyanate such as a trimethylolpropane adduct of tolylene diisocyanate, a trimethylolpropane adduct of hexamethylene diisocyanate, a trimethylolpropane adduct of isophorone diisocyanate, an isocyanurate of tolylene diisocyanate, an isocyanurate of hexamethylene diisocyanate, an isocyanurate of isophorone diisocyanate, a biuret of hexamethylene diisocyanate; and a urethane cross-linking agent such as block-type isocyanates of these polyisocyanates. As the compound having two or more isocyanate groups in one molecule, one or a mixture of two or more of these compounds can be used. Further, if desired, a catalyst such as dibutyltin dilaurate or dibutyltin diethylhexoate may be added.

The blending amount of the compound having two or more isocyanate groups in one molecule may be, from the viewpoint of improving the adhesive strength between the insulating film and the layer of the hot-melt adhesive of the present invention, preferably 5-50 parts by mass, more preferably 10-40 parts by mass, and still more preferably 15-30 parts by mass with respect to 100 parts by mass of the thermoplastic copolyester.

The anchor coat forming paint may contain a solvent, if desired, in order to be diluted to a concentration for easy application. The solvent is not particularly limited as long as it does not react with components of the anchor coat forming paint or catalyze (promote) the self-reaction (including deterioration reaction) of these components. Examples of the solvent include 1-methoxy-2-propanol, ethyl acetate, n-butyl acetate, toluene, methyl ethyl ketone, methyl isobutyl ketone, diacetone alcohol, and acetone. As the solvent, one or a mixture of two or more of these solvents can be used.

The anchor coat forming paint may contain, if desired, one or more additives such as an antistatic agent, a surfactant, a leveling agent, a thixotropy imparting agent, a stain inhibitor (or a fouling inhibitor), a printability improver, an antioxidant, a weather-resistant stabilizer, a light-resistant stabilizer, a UV absorber, a heat stabilizer, a colorant, an ink, a flame retardant, and a filler.

The anchor coat forming paint can be obtained by mixing and stirring these components.

The method for forming the anchor coat on one surface of the insulating film (the surface for forming the layer of the hot-melt adhesive of the present invention) using the anchor coat forming paint is not particularly limited, and a known web coating method can be used. Examples of the method include roll coating, gravure coating, reverse coating, roll brushing, spray coating, air-knife coating, and die coating.

The thickness of the anchor coat may be usually 0.1-5 µm, preferably 0.3-3 µm, and more preferably 0.5-2 µm from the viewpoint of the adhesive strength of the anchor coat.

### 3. Flexible flat cable

A flexible flat cable preferably includes the hot-melt adhesive of the present invention. The flexible flat cable of the present invention preferably includes a syndiotactic polystyrene resin film as the insulating base film of an insulating adhesive laminate that sandwiches and covers a plurality of arranged conductors. The flexible flat cable having a reinforced conductor terminal of the present invention preferably has a conductor terminal reinforced with the reinforcing tape of the present invention. The hot-melt adhesive of the present invention and the reinforcing tape of the present invention have been described above.

A method of producing the flexible flat cable of the present invention is not particularly limited, and the flexible flat cable can be produced by a known method. Examples of the above method include the following. On one surface of any type of insulating base film, preferably on one surface of a syndiotactic polystyrene resin film, using two rolls of insulating adhesive laminates for a flexible flat cable, the insulating adhesive laminates being provided with a layer containing any type of flame-retardant hot-melt adhesive, or in one embodiment, on one surface of a syndiotactic polystyrene resin film, using two rolls of insulating adhesive laminates for a flexible flat cable, the insulating adhesive laminates being provided with one or more layers containing the hot-melt adhesive of the present invention, by the use of a known flexible flat cable manufacturing apparatus, the insulating adhesive laminates are fed out so that the layers of the flame-retardant hot-melt adhesive face each other, and flat wires of conductors aligned in parallel are sandwiched between the layers, and then the layers of the flame-retardant hot-melt adhesive are fused to each other by hot pressing with a hot press roll of the apparatus. In the insulating adhesive laminates, before the flat wires of the conductors are sandwiched, a hole is punched out, and the reinforcing tape of the present invention is stuck on the part of the punched hole from the side of the insulating base film layer of each of the insulating adhesive laminates. Next, both ends are slit to make a preform with a predetermined finishing width, and the preform is cut at the hole and the reinforcing tape of the present invention to complete the flexible flat cable in which the conductor terminal is reinforced with the reinforcing tape of the present invention.

The flat wire of the conductor is not particularly limited, and any type of flat wire can be used. The flat wire of the conductor may be, from the viewpoint of slidability of the flexible flat cable, annealed copper wire, a hard drawn copper wire, and a tin-plated wire or a nickel-plated wire thereof having a thickness of 12-50 µm and a width of 0.2-2 mm.

The syndiotactic polystyrene resin film is a film formed from a syndiotactic polystyrene resin. The resin film includes a non-stretched film, a uniaxially stretched film, and a biaxially stretched film. Further, the resin film includes a laminated film in which two or more layers of one or more of these films are laminated.

The syndiotactic polystyrene resin is a polymer mainly containing a structural unit derived from styrene and is a polystyrene resin mainly containing a syndiotactic structure. The syndiotactic polystyrene resin has a small relative permittivity. Therefore, the syndiotactic polystyrene resin film is suitable as a material used for a flexible flat cable for high-speed transmission, typically as an insulating base film of an insulating adhesive laminate. Further, since the syndiotactic polystyrene resin has regularity in three-dimensional structure as described later, it has crystallinity and is excellent in heat resistance.

Here, "mainly containing a structural unit derived from styrene" means that the content of a structural unit derived from styrene is usually 50 mol% or more, preferably 70 mol% or more, more preferably 85 mol% or more, and still more preferably 90-100 mol%. The "syndiotactic structure" is a three-dimensional structure in which side chain phenyl groups (including substituted phenyl groups) are alternately located in opposite directions with respect to the main chain formed with carbon-carbon bonds. The phrase "mainly containing a syndiotactic structure" means that a racemic diad fraction (i.e. a ratio of the three-dimensional structure of a structural unit derived from two consecutive vinyl aromatic monomers having the syndiotactic structure) is usually 60 mol% or more, preferably 75% or more, and more preferably 85-100%. Further, examples of a structural unit derived from a monomer other than styrene, which can be contained in the syndiotactic polystyrene resin, include structural units derived from one or more of alkylstyrenes such as methylstyrene, ethylstyrene, isopropylstyrene, t-butylstyrene, and divinylbenzene; halogenated styrenes such as chlorostyrene, bromostyrene, and fluorostyrene; halogenated alkylstyrenes such as chloromethylstyrene; and alkoxystyrenes such as methoxystyrene and ethoxystyrene.

Examples of the insulating adhesive laminate for a flexible flat cable, in which one or more layers containing the hot-melt adhesive of the present invention are provided on one surface of the syndiotactic polystyrene resin film include an insulating adhesive laminate for a flexible flat cable, in which the layer of a composition of the hot-melt adhesive of the present invention and any type of flame retardant is provided on one surface of the syndiotactic polystyrene resin film; and an insulating adhesive laminate for a flexible flat cable, in which the layer of the hot-melt adhesive of the present invention is provided on one surface of the syndiotactic polystyrene resin film, and any type of flame-retardant hot-melt adhesive layer is further provided on that surface.

As any type of the flame-retardant hot-melt adhesive as mentioned above, for example, a flame-retardant polyester-based hot-melt adhesive, a flame-retardant polyolefin-based hot-melt adhesive, and the like that are known can be used. The preferred flame-retardant polyolefin-based hot-melt adhesive is not particularly limited, but include, for example, "an adhesive resin composition containing (A) 20-70 mass% of an acid-modified polypropylene-based resin; (B) 20-60 mass% of a polypropylene-based resin; and (C) 2-25 mass% of a copolymer of ethylene and one or more comonomer selected from the group consisting of vinyl acetate, an alkyl methacrylate, and an alkyl acrylate, in which the sum of component (A), (B) and (C) is 100 mass%", which is described in WO-A-2016/181880, and "a resin composition for an adhesive layer of a laminate, containing (A) 55-85 mass% of an acid-modified polypropylene-based resin; and (B) 45-15 mass% of a copolymer of ethylene and one or more comonomer selected from the group consisting of vinyl acetate, an alkyl methacrylate, and an alkyl acrylate, in which the sum of component (A) and (B) is 100 mass%, and the amount of acid modification of component (A) is 0.5-10 mol%", which is described in WO-A-2018/042995.

### Examples

Hereinafter, the present invention will be described with reference to Examples, but the present invention is not limited thereto.

### Measuring methods

All of the following tests were carried out in an environment with a temperature of 23°C and a humidity of 50%, unless otherwise specified.

### (I) Adhesive strength to syndiotactic polystyrene resin film

A syndiotactic polystyrene resin film "Oidys HN" (trade name) available from Kurabo Industries Ltd. and the hot-melt adhesive layer of the reinforcing tape were fused under the conditions of a temperature of 180°C, a time of 2 seconds, and a pressure of 0.3 MPa, using a HG-100 type heat seal tester available from Toyo Seiki Seisaku-sho, Ltd. Here, the tensile direction of a 180° peeling test was made to match the machine direction of the syndiotactic polystyrene resin film and the machine direction of the reinforcing tape. Next, both were peeled off under the conditions of a peeling width of 25 mm, a peeling speed of 100 mm/min, and a peeling angle of 180°, and the adhesive strength was measured (simply referred to as "adhesive strength" in the table below). Further, the peeling interface was visually observed to determine at which interface the peeling occurred. In the table below, a case where peeling occurred at the interface between the syndiotactic polystyrene resin film and the hot-melt adhesive layer is represented as SPS, and a case where peeling occurred at the interface between the hot-melt adhesive layer and the anchor coat of the reinforcing tape, or between the anchor coat and the biaxially stretched polyethylene terephthalate-based resin film of the reinforcing tape is represented as AC. In a case where the syndiotactic polystyrene resin film or the biaxially stretched polyethylene terephthalate-based resin film caused material fracture, it is represented accordingly. As the evaluation criteria for the adhesive strength, 3 N/25 mm or more is an acceptable level, 5 N/25 mm or more is preferable, 7 N/25 mm or more is more preferable, and 8 N/25 mm or more is still more preferable. The higher adhesive strength is preferable.

### (1-2) Conductor adhesive strength

### (I-2-1) Production of flexible flat cable

By the use of a flexible flat cable production apparatus, using 2 rolls of insulating adhesive laminate "NC5224" (trade name) for a flexible flat cable, available from Riken Technos Corporation, 12 hard drawn copper wires with a conductor width of 1.4 mm and a thickness of 0.035 mm, which had been arranged, were sandwiched between a hot-melt adhesive layer of the insulating adhesive laminate on one side and another hot-melt adhesive layer of the insulating adhesive laminate on the other side, and pressed under the conditions of a line speed of 0.5 m/min and a pressure of 3 MPa with a pressure roll preheated to a temperature of 180°C and a receiving roll preheated to 180°C to be fused, then both ends of the resultant preform were slit to make the width be 24 mm, and the preform was cut at holes and a reinforcing tape at the center line in the machine direction to obtain a flexible flat cable with a length of 100 mm and a width of 24 mm. In this process, in the insulating adhesive laminate, holes of 20 mm in the machine direction × 24 mm in the cross-machine direction were punched at intervals of 100 mm in the machine direction, and the reinforcing tape cut into a length of 150 mm was stuck on the holes from the insulating base film layer side of the insulating adhesive laminate, thus obtaining the flexible flat cable having the reinforced conductor terminal.

### (I-2-2)

The adhesive strength between the reinforcing tape of the flexible flat cable having the reinforced conductor terminal obtained as described above and the copper wire was measured by 180 degree peeling of the copper wire from the reinforcing tape under the condition of a test speed of 50 mm/min.

### (II) Tackiness 1

Evaluation was made if a separator is necessary or not when a reinforcing tape is commercialized, from web handling condition in a winding process after forming the hot-melt adhesive layer of the reinforcing tape and drying it (i.e., whether or not the hot-melt adhesive layer was tacked to a transfer roll, etc.), from feeling when touching the surface of the hot-melt adhesive layer of the reinforcing tape, and from web handling condition when feeding out the reinforcing tape from a film roll made without a separator in the slit process (e.g., the presence or absence of abnormal noise when peeling off the blocked film, fluctuations in a feeding position from the film roll, or the like).
A: Not only the test could be carried out smoothly, but the tackiness was sufficiently low to the extent that no separator will be required for commercializing.
B: The test was carried out without a separator. However, the reinforcing tape had a certain degree of tackiness, so that a separator will be required for commercializing.
C: The tackiness was quite high, and the test could not be carried out without a separator.

### (II-2) Tackiness 2

From the feeling of touching the surface of the hot-melt adhesive layer of the reinforcing tape, the reinforcing tape of Example 1 and a commercially available reinforcing tape ("P188B-30" (trade name) from Riken Technos Corporation) were used as standard samples, and the tackiness was evaluated according to the following criteria.
A: The tackiness was substantially equivalent to that of the commercially available reinforcing tape.
B: The tackiness was higher than that of the commercially available reinforcing tape, but lower than that of the reinforcing tape of Example 1.
C: The tackiness was substantially equivalent to that of the reinforcing tape of Example 1.
D: The tackiness was higher than that of the reinforcing tape of Example 1.

### Raw materials used

### (P1) Hydrogenated product of block copolymer of aromatic vinyl compound and conjugated diene compound

(P1-1) A hydrogenated product of a block copolymer of styrene and 1,3-butadiene "Taftec H1041" (trade name) available from Asahi Kasei Corporation. The content of a structural unit derived from styrene of 30 mass%, the mass average molecular weight of 82 thousand, and the number average molecular weight of 63 thousand.

(P1-2) A hydrogenated product of a block copolymer of styrene and 1,3-butadiene "Tuftec H1221" (trade name) available from Asahi Kasei Corporation. The content of a structural unit derived from styrene of 12 mass%, the mass average molecular weight of 150 thousand and the number average molecular weight of 100 thousand.

(P1-3) A hydrogenated product of a block copolymer of styrene and 1,3-butadiene "Tuftec H1043" (trade name) available from Asahi Kasei Corporation. The content of a structural unit derived from styrene of 67 mass%, the mass average molecular weight of 57 thousand, and the number average molecular weight of 46 thousand.

(P1-4) A hydrogenated product of a block copolymer of styrene and 1,3-butadiene "Septon 8006" (trade name) available from Kuraray Co., Ltd. The content of a structural unit derived from styrene of 33 mass%, the mass average molecular weight of 270 thousand, and the number average molecular weight of 130 thousand.

(P1-5) A hydrogenated product of a block copolymer of styrene and 1,3-butadiene "Septon 4033" (trade name) available from Kuraray Co., Ltd. The content of a structural unit derived from styrene of 30 mass%, the mass average molecular weight of 95 thousand, and the number average molecular weight of 73 thousand. The hydrogenation rate of 98.8 mol%.

### (P2) Hydrogenated product of random copolymer of aromatic vinyl compound and conjugated diene compound

(P2-1) A hydrogenated product of a random copolymer of styrene and 1,3-butadiene "DYNARON 1320P" (trade name). The hydrogenation rate of 100 mol% (99.9 mol% or more), the content of a structural unit derived from styrene of 9.7 mass%, the mass average molecular weight of 260 thousand, and the number average molecular weight of 210 thousand.

### (P3) Acid-modified hydrogenated product of copolymer of aromatic vinyl compound and conjugated diene compound

(P3-1) A maleic anhydride-modified hydrogenated product of a block copolymer of styrene and 1,3-butadiene "Taftec M1913" (trade name) available from Asahi Kasei Corporation. The content of a structural unit derived from styrene of 30 mass%, the mass average molecular weight of 91 thousand, and the number average molecular weight of 43 thousand. The acid value of 10 mg CH₃ONa/g.

### (P4) Amine-modified hydrogenated product of copolymer of aromatic vinyl compound and conjugated diene compound

(P4-1) An amine-modified hydrogenated product of a copolymer of styrene and 1,3-butadiene "Taftec MP10" (trade name) available from Asahi Kasei Corporation. The content of a structural unit derived from styrene of 30 mass%, the mass average molecular weight of 50 thousand, and the number average molecular weight of 21 thousand.

### (P') Thermoplastic saturated copolyester-based resin

(P'-1) A crystalline thermoplastic saturated copolyester-based resin "ARON MELT PES-111EE" (trade name) available from Toagosei Co., Ltd.

### (Q) Petroleum resin

(Q-1) A petroleum resin "I-MARV P-140" (trade name), which is a hydrogenated product of a copolymer of dicyclopentadiene and an aromatic unsaturated hydrocarbon compound available from Idemitsu Kosan Co., Ltd. The softening point of 140°C.

### (Q') Comparative substance

(Q'-1) A terpene phenol resin "YS POLYSTAR T145" (trade name) available from Yasuhara Chemical Co., Ltd. The softening point of 145°C.

### (R) Anti-blocking agent

(R-1) Talc "P-6" (trade name) available from Nippon Talc Co., Ltd. The average particle size of 4 µm.

(R-2) Talc "MS-P" (trade name) available from Nippon Talc Co., Ltd. The average particle size of 15 µm.

### (A) Coating material for forming anchor coat

(A-1) A coating material obtained by mixing and stirring 42 parts by mass of the following (a1), 58 parts by mass of the following (a2), 23 parts by mass of the following (a3), 35 parts by mass of the following (a4), and 600 parts by mass of methyl ethyl ketone.
(a1) A thermoplastic copolyester-based resin "Vylon 240" (trade name) available from Toyobo Co., Ltd. Non-crystalline (the amount of heat of fusion of 0 J/g (no clear fusion peak)), and the glass transition temperature of 60°C.
(a2) A thermoplastic copolyester-based resin "Vylon 560" (trade name) available from Toyobo Co., Ltd. Non-crystalline (the amount of heat of fusion of 0 J/g (no clear fusion peak)), and the glass transition temperature of 7°C.
(a3) A compound having two or more isocyanate groups in one molecule, "Coronate HX" (trade name) available from Tosoh Corporation.
(a4) Ink "NB500 739 Indigo" (trade name) available from Dainichiseika Color & Chemicals Mfg. Co., Ltd.

### Example 1

Using the (A-1), an anchor coat was formed on one surface of a biaxially stretched polyethylene terephthalate-based resin film having a thickness of 188 µm with a roll coater so that the thickness of the anchor coat after drying was 1 µm. Next, on the surface of the formed anchor coat, using a coating material obtained by mixing and stirring 20 parts by mass of the (P1-1) and 80 parts by mass of toluene, a hot-melt adhesive layer was formed so that the thickness was 30 µm after drying by the use of a roll coater. The resultant preform was slit to make the width of 30 mm, thus obtaining a reinforcing tape. The tests (I) and (II) were carried out. The results are shown in Table 1. In the table, the resin used for the hot-melt adhesive layer is represented as "Component P", and the content of the structural unit derived from styrene in the resin used for the hot-melt adhesive layer is represented as "St content".

### Examples 2-9

The preparation and the tests of determination and evaluation of the physical properties for each of the reinforcing tapes were carried out as in Example 1 except that one of the (P1-2) to (P4-1) and (P'-1) was used instead of the (P1-1). The results are shown in Table 1.

### [Table 1]

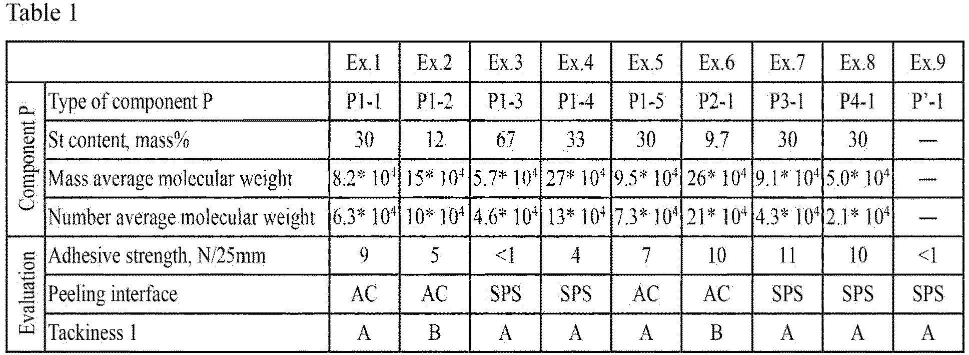

### Examples 10-15

Reinforcing tapes were each obtained in a similar manner to Example 1 except that the hot-melt adhesive was changed to the formulations shown in Table 2, respectively. The tests (I), (1-2), and (II-2) were carried out. For Example 1, the tests (1-2) and (II-2) were carried out. The results are shown in Table 2. In Table 2, the hot-melt adhesive is referred to as "HM".

### [Table 2]

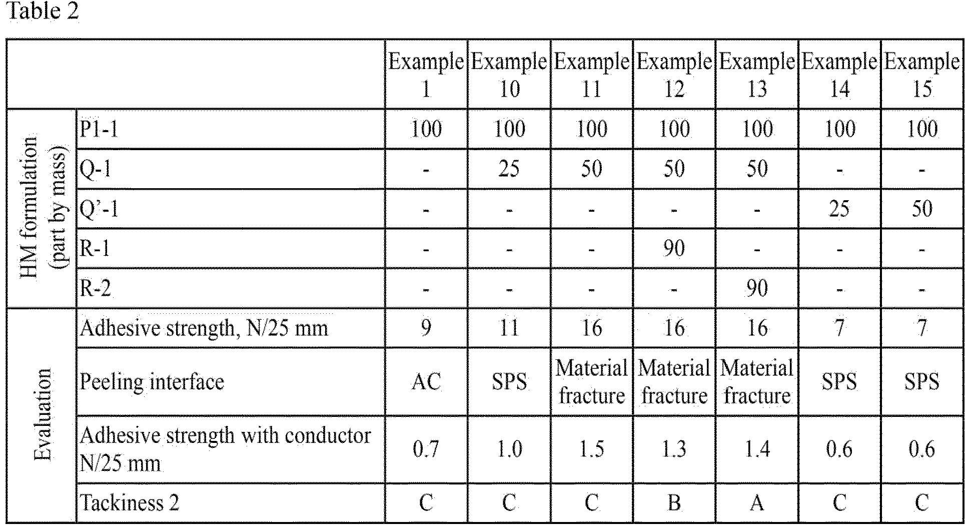

The coat layer of the hot-melt adhesive of the present invention was successfully formed on the surface of the anchor coat of the polyester-based resin. The reinforcing tape of the present invention had good adhesive strength to the syndiotactic polystyrene resin film. Further, the preferable reinforcing tape of the present invention had a sufficiently low tackiness and will not require a separator when commercialized. Moreover, the preferable reinforcing tape of the present invention had a tackiness substantially equivalent to that of a commercially available product (that is, one having a sufficiently low tackiness and being well used industrially). Therefore, it was found that the reinforcing tape of the present invention can be suitably used for reinforcing the conductor terminal of a flexible flat cable, and particularly for reinforcing the conductor terminal of a flexible flat cable in which the insulating base film of an insulating adhesive laminate is a syndiotactic polystyrene resin film.

On one surface of a syndiotactic polystyrene resin film "Oidys HN" (trade name) available from Kurabo Industries Ltd., using a coating material obtained by mixing and stirring 20 parts by mass of the hot-melt adhesive of Example 11 and 80 parts by mass of toluene, a hot-melt adhesive layer was provided so that the thickness after drying was 5 µm so as to make a laminate by the use of a roll coater. Next, using a HG-100 type heat seal tester available from Toyo Seiki Seisaku-sho, Ltd., the surface of the hot-melt adhesive layer side of the laminate and the surface of the flame-retardant hot-melt adhesive side of an insulating adhesive laminate "NC5224" (trade name) for a flexible flat cable, available from Riken Technos Corporation, (the flame-retardant hot-melt adhesive is a flame-retardant polyester-based hot-melt adhesive) were fused under the conditions of a temperature of 180°C, a time of 2 seconds, and a pressure of 0.3 MPa. Here, the tensile direction of the 180° peeling test was made to match the machine direction of the syndiotactic polystyrene resin film and the machine direction of the insulating adhesive laminate for a flexible flat cable. Subsequently, both were peeled off under the conditions of a peeling width of 25 mm, a peeling speed of 100 mm/min, and a peeling angle of 180°, and the adhesive strength was measured. The result was the adhesive strength of 16 N/25mm, and the syndiotactic polystyrene resin film caused material fracture.

From these test results, a person skilled in the art will find that a laminate in which one or more layers containing the hot-melt adhesive of the present invention are provided on one surface of a syndiotactic polystyrene resin film is very useful as an insulating adhesive laminate for a flexible flat cable.

### REFERENCE SIGNS LIST

1 Flexible flat cable
2 Reinforcing tape
3 Conductor terminal

## Claims

1. A hot-melt adhesive for reinforcing a conductor terminal of a flexible flat cable, comprising at least one member selected from the group consisting of:
(P1) a hydrogenated product of a block copolymer of an aromatic vinyl compound and a conjugated diene compound, wherein a content of a structural unit derived from the aromatic vinyl compound is not more than 65 mass% relative to a total of the content of the structural unit derived from the aromatic vinyl compound and a content of a structural unit derived from the conjugated diene compound,
(P2) a hydrogenated product of a random copolymer of an aromatic vinyl compound and a conjugated diene compound,
(P3) an acid-modified hydrogenated product of a copolymer of an aromatic vinyl compound and a conjugated diene compound, and
(P4) an amine-modified hydrogenated product of a copolymer of an aromatic vinyl compound and a conjugated diene compound; and
optionally comprising (Q) a petroleum resin and/or (R) an anti-blocking agent.

2. A hot-melt adhesive for reinforcing a conductor terminal of a flexible flat cable, comprising 100 parts by mass of at least one member selected from the group consisting of:
(P1) a hydrogenated product of a block copolymer of an aromatic vinyl compound and a conjugated diene compound, wherein a content of a structural unit derived from the aromatic vinyl compound is not more than 65 mass% relative to a total of the content of the structural unit derived from the aromatic vinyl compound and a content of a structural unit derived from the conjugated diene compound,
(P2) a hydrogenated product of a random copolymer of the aromatic vinyl compound and the conjugated diene compound,
(P3) an acid-modified hydrogenated product of a copolymer of an aromatic vinyl compound and a conjugated diene compound, and
(P4) an amine-modified hydrogenated product of a copolymer of an aromatic vinyl compound and a conjugated diene compound; and
1-100 parts by mass of (Q) a petroleum resin; and
optionally comprising 5-200 parts by mass of (R) an anti-blocking agent.

3. A reinforcing tape for reinforcing a conductor terminal of a flexible flat cable, comprising a hot-melt adhesive layer on one surface of an insulating film,
wherein the hot-melt adhesive layer includes a hot-melt adhesive comprising at least one member selected from the group consisting of:
(P1) a hydrogenated product of a block copolymer of an aromatic vinyl compound and a conjugated diene compound, wherein a content of a structural unit derived from the aromatic vinyl compound is not more than 65 mass% relative to a total of the content of the structural unit derived from the aromatic vinyl compound and a content of a structural unit derived from the conjugated diene compound,
(P2) a hydrogenated product of a random copolymer of an aromatic vinyl compound and a conjugated diene compound,
(P3) an acid-modified hydrogenated product of a copolymer of an aromatic vinyl compound and a conjugated diene compound, and
(P4) an amine-modified hydrogenated product of a copolymer of an aromatic vinyl compound and a conjugated diene compound.

4. The reinforcing tape according to claim 3, wherein the hot-melt adhesive further comprises (Q) a petroleum resin.

5. The reinforcing tape according to claim 4,
wherein the hot-melt adhesive comprises 100 parts by mass of at least one member selected from the group consisting of:
the (P1) hydrogenated product of the block copolymer of the aromatic vinyl compound and the conjugated diene compound, wherein the content of the structural unit derived from the aromatic vinyl compound is not more than 65 mass% relative to the total of the content of the structural unit derived from the aromatic vinyl compound and the content of the structural unit derived from the conjugated diene compound,
the (P2) hydrogenated product of the random copolymer of the aromatic vinyl compound and the conjugated diene compound,
the (P3) acid-modified hydrogenated product of the copolymer of the aromatic vinyl compound and the conjugated diene compound, and
the (P4) amine-modified hydrogenated product of the copolymer of the aromatic vinyl compound and the conjugated diene compound; and
1-100 parts by mass of the (Q) petroleum resin.

6. The reinforcing tape according to claim 4 or 5, wherein a softening point of the (Q) petroleum resin is 120-160°C.

7. The reinforcing tape according to any one of claims 3 to 6, wherein the hot-melt adhesive further comprises (R) an anti-blocking agent.

8. The reinforcing tape according to claim 7,
wherein the hot-melt adhesive comprises 100 parts by mass of at least one member selected from the group consisting of:
the (P1) hydrogenated product of the block copolymer of the aromatic vinyl compound and the conjugated diene compound, wherein the content of the structural unit derived from the aromatic vinyl compound is not more than 65 mass% relative to the total of the content of the structural unit derived from the aromatic vinyl compound and the content of the structural unit derived from the conjugated diene compound,
the (P2) hydrogenated product of the random copolymer of the aromatic vinyl compound and the conjugated diene compound,
the (P3) acid-modified hydrogenated product of the copolymer of the aromatic vinyl compound and the conjugated diene compound, and
the (P4) amine-modified hydrogenated product of the copolymer of the aromatic vinyl compound and the conjugated diene compound;
1-100 parts by mass of the (Q) petroleum resin; and
5-200 parts by mass of the (R) anti-blocking agent.

9. The reinforcing tape according to claim 7 or 8, wherein the (R) anti-blocking agent has an average particle size of 5-25 µm.

10. The reinforcing tape according to any one of claims 3 to 9, wherein an adhesive strength between the hot-melt adhesive layer of the reinforcing tape and a syndiotactic polystyrene resin film is 5 N/25 mm or more.

11. The reinforcing tape according to any one of claims 3 to 10, wherein a flexible flat cable having a conductor terminal to be reinforced with the reinforcing tape comprises (i) a plurality of arranged conductors and (ii) an insulating adhesive laminate including an insulating base film that is a syndiotactic polystyrene resin film and an adhesive resin composition layer provided on one surface of the insulating base film, and sandwiching and covering the plurality of conductors.

12. The reinforcing tape according to any one of claims 3 to 11, wherein the hot-melt adhesive comprises a hydrogenated product of a block copolymer of styrene and a conjugated diene compound, the hydrogenated product having 5-65 mass% of a content of a structural unit derived from styrene relative to a total of the content of the structural unit derived from styrene and a content of a structural unit derived from the conjugated diene compound, and having a mass average molecular weight of 10-250 thousand.

13. The reinforcing tape according to any one of claims 3 to 11, wherein the hot-melt adhesive comprises a hydrogenated product of a random copolymer of styrene and a conjugated diene compound.

14. The reinforcing tape according to any one of claims 3 to 11, wherein the hot-melt adhesive comprises an acid-modified hydrogenated product of a copolymer of styrene and a conjugated diene compound.

15. The reinforcing tape according to any one of claims 3 to 11, wherein the hot-melt adhesive comprises an amine-modified hydrogenated product of a copolymer of styrene and a conjugated diene compound.

16. A flexible flat cable having a conductor terminal reinforced with the reinforcing tape for reinforcing the conductor terminal according to any one of claims 3 to 15.

17. The flexible flat cable having the reinforced conductor terminal according to claim 16, wherein an insulating base film of an insulating adhesive laminate that sandwiches and covers a plurality of arranged conductors is a syndiotactic polystyrene resin film.
